# FASCICULE DE BREVET EUROPEEN

(11) **EP 0 815 714 B1**
(45) Date de publication et mention de la délivrance du brevet: **18.10.2000**
(21) Numéro de dépôt: 97450016.7
(22) Date de dépôt: 02.07.1997
(51) Int. Cl.: A01B 71/06, F16P 3/12

(54) **Dispositif de sécurité pour désolidariser un arbre moteur télescopique, notamment d'une prise de force**
Sicherheitsvorrichtung zum Abkuppeln einer teleskopischen Antriebswelle, insbesondere von einer Zapfwelle
Safety device for disengaging a telescopic drive shaft, in particular from power-take-off

(30) Priorité: 04.07.1996 FR 9608559
(43) Date de publication de la demande: 07.01.1998
(73) Titulaire: Guerineau, Philippe, 79500 Melle (FR)
(72) Inventeur: Guerineau, Philippe, 79500 Melle (FR)
(74) Mandataire: Thébault, Jean-Louis

(56) Documents cités:
- EP-A- 0 016 588
- EP-A- 0 452 015
- WO-A-93/14620
- DE-C- 4 205 997
- FR-A- 2 618 288
- US-A- 2 800 004
- US-A- 5 311 961
- US-A- 5 314 038

## Description

La présente invention concerne un dispositif de sécurité notamment pour éviter les accidents provoqués par les prises de force des tracteurs et plus généralement par les arbres menés télescopiques (voir p. ex. US-A-5 311 961).

Les tracteurs sont de plus en plus utilisés pour tracter des machines agricoles mais celles-ci sont animées et la force motrice est fournie par le tracteur lui-même à travers un arbre mené lié à une prise de force.

Les machines agricoles consomment beaucoup d'énergie par le fait qu'elles sont de plus en plus sophistiquées ce qui conduit à des puissances de moteur des tracteurs de plus en plus importantes.

Régulièrement l'utilisateur est amené à intervenir sur la machine pour des raisons mécaniques, pour déconnecter un flexible pour fluide hydraulique, pour regarder à l'intérieur ou pour déceler la provenance d'un bruit anormal, par exemple, ou tout simplement pour le réglage de la machine, les raisons étant multiples. L'utilisateur doit bien sûr arrêter le fonctionnement de la machine en débrayant la prise de force ou mieux, en arrêtant le moteur du tracteur mais tous les utilisateurs savent aussi que les accidents arrivent par l'inobservation de ces règles de prudence, ceci quelle que soit la bonne raison qui pousse l'utilisateur à ne pas les observer.

Ainsi, tous les ans on peut dénombrer des accidents mortels au cours desquels l'utilisateur a ses vêtements enroulés dans la transmission.

Une solution actuellement proposée pour tenter de résoudre le problème est de protéger la transmission par un cache en plastique de section circulaire, coaxial à cet arbre et libre en rotation, ce qui évite que les vêtements ne soient happés par l'arbre tournant.

Le cache est maintenu immobile en rotation par une liaison par chaîne reliée à une pièce du châssis du tracteur.

On s'est rapidement aperçu que ces caches réalisés en matière plastique ont une durée de vie courte et de plus les utilisateurs sont obligés de les démonter pour atteindre certains points de graissage par exemple et bien souvent, les caches ne sont pas remontés.

De plus l'accès au verrouillage de l'arbre sur la prise de force est perturbé par l'extrémité du cache, ce qui donne un autre prétexte pour le retirer.

Si, sur le plan théorique, on peut penser que cette solution donne satisfaction, dans la réalité les risques restent importants.

De plus on remarque surtout que l'arbre reste en rotation, le cache n'étant qu'une sécurité de protection passive mais pas une sécurité active assurant l'arrêt de la rotation.

La présente invention propose un dispositif de sécurité qui pallie les inconvénients de l'art antérieur en arrêtant la rotation de l'arbre d'entraînement. Ce dispositif présente de nombreux avantages, notamment celui d'être d'un prix réduit et de pouvoir être adapté sur les prises de force existantes tout en étant surtout très fiable car le principe retenu est purement mécanique.

A cet effet, le dispositif de sécurité selon l'invention est défini par la revendication 1.

Selon un mode de réalisation préférentiel, le déclencheur comprend un arbre court solidaire de la première tête du crabot, monté coaxial à la seconde demi-tête et au premier demi-arbre, un levier parallèle et monté pivotant par rapport à l'axe longitudinal de l'arbre mené, un doigt solidaire de ce levier ainsi que deux trous ménagés respectivement dans le premier demi-arbre et dans l'arbre court, prévus pour recevoir dans une position dite verrouillée ledit doigt.

L'arbre court peut aussi porter un manchon dont la tranche forme butée du doigt en lieu et place du trou.

Plus particulièrement, le levier est un levier télescopique est fixé sur les premier et second demi-arbres et comprend un ensemble d'une lumière et d'un pion de guidage.

De plus, l'élément élastique de rappel est un ressort hélicoïdal monté coaxialement et intérieurement au crabot.

De façon perfectionnée, le dispositif peut comprendre plusieurs déclencheurs, régulièrement répartis sur la périphérie de l'arbre d'entraînement.

L'invention est décrite ci-après selon un mode de réalisation particulier, non limitatif, en regard des dessins annexés, les différentes figures représentant :
- figure 1, une vue en élévation latérale du dispositif selon l'invention, dans la position enclenchée, avec des arrachements partiels permettant d'appréhender le montage complet,
- figure 2, une vue identique à celle de la figure 1 mais dans la position déclenchée,
- figure 3, une vue d'une section transversale suivant la ligne 3-3 de la figure 1,
- figure 4, une vue d'une section transversale suivant la ligne 4-4 de la figure 1,
- figure 5, une vue d'une section transversale suivant la ligne 5-5 de la figure 1, et
- figure 6, une vue d'une variante de réalisation du blocage du doigt sur l'arbre court.

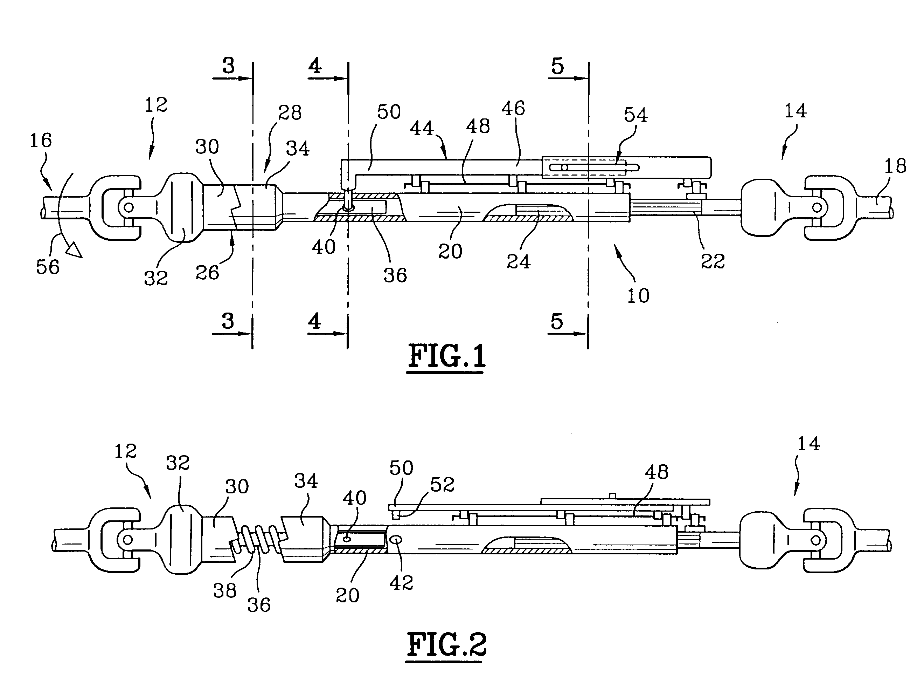

Sur les figures 1 et 2, les éléments identiques portent les mêmes références.

Le dispositif comprend de façon connue un arbre 10 d'entraînement avec deux montages à la cardan 12 et 14 aux extrémités.

Le premier montage 12 est connecté à la prise de force du tracteur, généralement par un arbre cannelé 16. Le second montage 14 est relié également par un arbre cannelé 18 à une machine entraînée quelconque, un épandeur, un pulvérisateur par exemple.

Seul l'arbre 10 d'entraînement présente un intérêt pour l'invention.

Cet arbre 10 est télescopique avec deux demi-arbres 20 et 22. Un système à cannelures 24 permet l'entraînement en rotation tout en autorisant l'allongement de l'arbre. En effet, lors des changements de direction ou lors du relevage de certains outils, il faut que l'arbre puisse varier en longueur.

Selon l'invention, il est prévu un coupleur mécanique 26, en l'occurrence, un crabot 28 avec une demi-tête 30 solidaire de la tulipe 32 entraînée du premier montage à la cardan 12 et une demi-tête 34 solidaire du demi-arbre 20.

La tulipe 32 entraînée est solidaire d'un arbre court 36 qui est monté coaxialement à l'intérieur du crabot 28 et de l'arbre 20.

Cet arbre court porte un ressort 38, monté autour de cet arbre, dont les extrémités sont interposées entre les deux demi-têtes 30 et 34 du crabot.

Cet arbre court porte en outre un trou 40 tout comme le demi-arbre 20 dont le trou est référencé 42.

En complément le dispositif est équipé d'un déclencheur 44. Ce déclencheur comprend un levier 46 pivotant autour d'un axe 48 longitudinal, parallèle à l'axe longitudinal de l'arbre 10.

Ce levier pivotant 46 est muni à son extrémité amont 50, du côté du premier montage à la cardan 12, d'un doigt 52 de blocage prévu pour passer, dans une première position dite verrouillée, à travers les trous 40 et 42 lorsqu'ils sont alignés comme sur la figure 1 et pour sortir de ces trous dans une seconde position dite déverrouillée, comme sur la figure 2.

Dans le mode de réalisation, on constate que le guidage par l'axe 48 se prolonge au-delà sur le second demi-arbre 22. De ce fait, il est prévu un ensemble 54 d'une lumière et d'un pion de guidage afin de rendre le levier 46 pivotant, également télescopique.

Une flèche 56 indique le sens de rotation retenu pour la présente description, sens pour lequel le dispositif est conçu. Il suffit d'inverser le montage du levier et du doigt pour les arbres tournant dans le sens inverse.

On note que le dispositif de sécurité ne fonctionne que pour un sens donné de rotation.

Le fonctionnement du dispositif selon la présente invention est très simple. En effet, lors de la mise en service, l'utilisateur pousse sur l'arbre 20 jusqu'à ce que le doigt 52 vienne en coïncidence avec les trous 40 et 42.

Cet état n'est atteint que lorsque les dents du crabot sont également en phase, cette manoeuvre est rendue aisée par le fait que les arbres peuvent tourner légèrement à l'arrêt, ceci dans les deux sens.

Le ressort 38 se trouve à l'état comprimé mais sa raideur est tout à fait surmontable par l'utilisateur car ainsi qu'on va l'expliquer, la puissance nécessaire est réduite.

Le dispositif se trouve dans l'état montré sur la figure 1.

De ce fait lorsque le premier montage à la cardan 12 tourne, il entraîne en rotation la première demi-tête 30 qui entraîne la demi-tête 34 et donc le demi-arbre 20 qui en est solidaire ainsi que le demi-arbre 22 par le jeu de cannelures 24.

Simultanément, l'arbre court 36 tourne avec la demi-tête 30, et le levier 46 du déclencheur 44, porteur du doigt 52, tourne aussi.

Lorsque l'utilisateur par inadvertance vient à entrer en contact avec le levier 46, il provoque le pivotement de celui-ci autour de l'axe 48, ce qui fait sortir le doigt des trous 40 et 42 de l'arbre court 36 et du demi-arbre 20, ce qui désolidarise en translation les deux demi-arbres 20 et 22.

Le ressort 38 exerçant une pression constante tend à écarter les deux demi-têtes 30 et 34 du crabot ce qui désaccouple en rotation le demi-arbre 20 du premier montage à la cardan 12.

La machine reliée au second montage à la cardan 14 n'est plus entraînée et bloque instantanément l'arbre 10. Seul l'arbre court 36 continu à être entraîné en rotation par la prise de force ainsi que le premier montage à la cardan avec la demi-tête 30 du crabot, mais sans danger.

On peut remarquer que le crabot 28 se désaccouple rapidement dès que le doigt est retiré des trous 40 et 42, et que l'effort à exercer suivant l'axe longitudinal est faible.

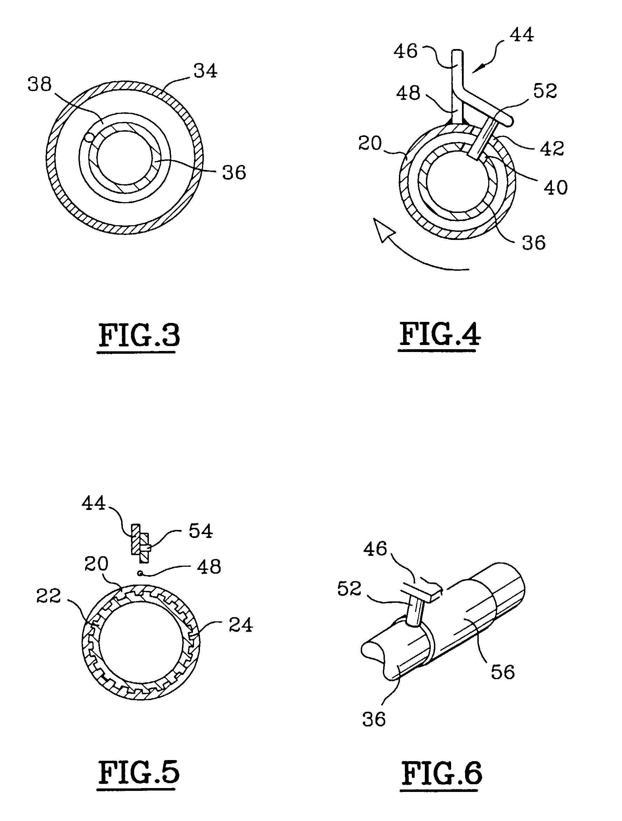

Afin de faciliter le montage et surtout le repositionnement du doigt, il est prévu une surépaisseur, par exemple une portion de tube formant manchon 56 comme sur la figure 6, le doigt venant en butée sur la tranche de ce manchon. Ceci permet de supprimer le trou 40.

En ce qui concerne la sécurité et pour améliorer éventuellement l'équilibrage, il est possible de disposer deux ou plus déclencheurs tels que 44, régulièrement répartis sur la périphérie.

Dans le cas où les dimensions l'exigent, on peut être amené à faire en sorte que l'arbre court 36 ait un diamètre extérieur inférieur au diamètre intérieur du demi-arbre 22 pour autoriser la pénétration de cet arbre 36 dans le demi-arbre 22 en position rétractée maximale notamment et pour améliorer le guidage.

## Revendications

1. Dispositif de sécurité pour immobiliser en rotation un arbre (10) télescopique mené, entraîné notamment par la prise de force d'un tracteur, cet arbre comprenant un premier (20) et un second (22) demi-arbres liés en rotation par des cannelures (24), caractérisé en ce qu'il comprend des moyens de couplage (26), en l'occurrence un crabot (28), ces moyens de couplage ayant une première demi-tête (30) destinée à être liée en rotation à la prise de force et une seconde demi-tête (34) destinée à être liée en rotation avec le premier demi-arbre (20), un élément élastique de rappel (38) tendant à écarter les deux demi-têtes suivant l'axe longitudinal de l'arbre ainsi qu'un déclencheur mécanique (44) destiné à être lié au moins à l'un des demi-arbres et permettant, sous l'effet d'une retenue, de laisser agir l'élément élastique de rappel et de déverrouiller les moyens de couplage.

2. Dispositif de sécurité selon la revendication 1, caractérisé en ce que le déclencheur (44) comprend un arbre court (36) solidaire de la première tête (30) du crabot (26), monté coaxial à la seconde demi-tête (34) et au premier demi-arbre (20), un levier parallèle (46) et monté pivotant par rapport à l'axe longitudinal de l'arbre (10) mené, un doigt (52) solidaire de ce levier ainsi que deux trous (40,42) ménagés respectivement dans le premier demi-arbre (20) et dans l'arbre court (36), prévus pour recevoir dans une position dite verrouillée ledit doigt.

3. Dispositif de sécurité selon la revendication 2, caractérisé en ce que l'arbre court (36) a un diamètre tel qu'il peut pénétrer dans le demi-arbre (22) pour permettre un gain de compacité.

4. Dispositif de sécurité selon la revendication 2 ou 3, caractérisé en ce que le levier (46) est un levier télescopique et comprend un ensemble d'une lumière et d'un pion de guidage (54).

5. Dispositif de sécurité selon l'une quelconque des revendications précédentes, caractérisé en ce que l'élément élastique de rappel (38) est un ressort hélicoïdal monté coaxialement et intérieurement au crabot.

6. Dispositif de sécurité selon l'une quelconque des revendications 2 à 5, caractérisé en ce que le trou (40) ménagé dans le demi-arbre (20) est remplacé par un manchon guide du doigt (52).

## Claims

1. Safety device for immobilising with respect to rotation a driven telescopic shaft (10), driven in particular by the power take-off of a tractor, this shaft comprising a first (20) and a second (22) half-shaft fixed together with respect to rotation by flutes (24), characterised in that it comprises coupling means (26), in this case a positive clutch (28), these coupling means having a first half-head (30) intended to be fixed with respect to rotation to the power take-off and a second half-head (34) intended to be fixed with respect to rotation to the first half-shaft (20), an elastic return element (38) tending to separate the two half-heads along the longitudinal axis of the shaft, and a mechanical release (44) intended to be connected at least to one of the half-shafts and making it possible, under the effect of a catch, to allow the elastic return element to act and to release the coupling means.

2. Safety device according to Claim 1, characterised in that the release (44) comprises a short shaft (36) fixed to the first head (30) of the positive clutch (26), mounted coaxial with the second half-head (34) and the first half-head (20), a parallel lever (46) mounted so as to pivot with respect to the longitudinal axis of the driven shaft (10), a finger (52) fixed to this lever and two holes (40, 42) provided respectively in the first half-shaft (20) and in the short shaft (36), designed to receive the said finger in a so-called locked position.

3. Safety device according to Claim 2, characterised in that the short shaft (36) has a diameter such that it can enter the half-shaft (22) to allow a gain in compactness.

4. Safety device according to Claim 2 or 3, characterised in that the lever (46) is a telescopic lever and comprises a set of one aperture and one guide stud (54).

5. Safety device according to any one of the preceding claims, characterised in that the elastic return element (38) is a helical spring mounted coaxially with and internally to the positive clutch.

6. Safety device according to any one of Claims 2 to 5, characterised in that the hole (40) provided in the half-shaft (20) is replaced by a guide sleeve for the finger (52).

## Patentansprüche

1. Sicherheitsvorrichtung zum Anhalten der Drehung einer geführten Teleskopwelle (10), die insbesondere durch die Zapfwelle eines Traktors angetrieben wird, wobei diese Welle eine erste (20) und eine zweite (22) Halbwelle umfaßt, die durch Riffelungen (24) drehfest miteinander verbunden sind, dadurch gekennzeichnet, daß sie Kopplungsmittel (26), im vorliegenden Fall eine Klauenkupplung (28), wobei diese Kopplungsmittel einen ersten Halbkopf (30), der dazu bestimmt ist, mit der Zapfwelle drehfest verbunden zu werden, sowie einen zweiten Halbkopf (34), der dazu bestimmt, ist mit der ersten Halbwelle (20) drehfest verbunden zu werden, besitzen, ein elastisches Rückstellelement (38), das bestrebt ist, die beiden Halbköpfe in Richtung der Längsachse der Welle voneinander zu beabstanden, sowie eine mechanische Auslöseeinrichtung (44), die dazu bestimmt ist, mit wenigstens einer der Halbwellen verbunden zu werden, und ermöglicht, unter der Wirkung einer Hemmung das elastische Rückstellelement wirken zu lassen und die Kopplungsmittel zu entriegeln, umfaßt.

2. Sicherheitsvorrichtung nach Anspruch 1, dadurch gekennzeichnet, daß die Auslöseeinrichtung (44) eine mit dem ersten Kopf (30) der Klauenkupplung (26) verbundene kurze Welle (36), die zum zweiten Halbkopf (34) und zur ersten Halbwelle (20) koaxial angebracht ist, einen parallelen Hebel (46), der in bezug auf die Längsachse der geführten Welle (10) schwenkbar angebracht ist, einen mit diesem Hebel fest verbundenen Zapfen (52) sowie zwei Löcher (40, 42), die in der ersten Halbwelle (20) bzw. in der kurzen Welle (36) ausgebildet sind und dazu vorgesehen sind, in einer sogenannten verriegelten Position den Zapfen aufzunehmen, umfaßt.

3. Sicherheitsvorrichtung nach Anspruch 2, dadurch gekennzeichnet, daß die kurze Welle (36) einen Durchmesser besitzt, derart, daß sie in die Halbwelle (22) eindringen kann, um eine Erhöhung der Kompaktheit zu ermöglichen.

4. Sicherheitsvorrichtung nach Anspruch 2 oder 3, dadurch gekennzeichnet, daß der Hebel (46) ein Teleskophebel ist und eine Einheit aus einem Langloch und einem Führungsstift (54) umfaßt.

5. Sicherheitsvorrichtung nach einem der vorhergehenden Ansprüche, dadurch gekennzeichnet, daß das elastische Rückstellelement (38) eine Schraubenfeder ist, die koaxial zu und innerhalb der Klauenkupplung angebracht ist.

6. Sicherheitsvorrichtung nach einem der Ansprüche 2 bis 5, dadurch gekennzeichnet, daß das Loch (40), das in der Halbwelle (20) ausgebildet ist, durch eine Führungsmuffe für den Zapfen (52) ersetzt ist.
